(19) Europäisches Patentamt
European Patent Office
Office européen des brevets

(11) EP 4 458 935 A1

(12) EUROPEAN PATENT APPLICATION
published in accordance with Art. 153(4) EPC

(43) Date of publication:
**06.11.2024 Bulletin 2024/45**

(21) Application number: **22915962.9**

(22) Date of filing: **23.12.2022**

(51) International Patent Classification (IPC):
***C11D 7/26*** *(2006.01)* ***C11D 7/50*** *(2006.01)*
***B41J 2/165*** *(2006.01)*

(52) Cooperative Patent Classification (CPC):
**B41J 2/165; C11D 7/26; C11D 7/50**

(86) International application number:
**PCT/JP2022/047688**

(87) International publication number:
**WO 2023/127739 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 JP 2021213984**

(71) Applicant: **DNP Fine Chemicals Co., Ltd.**
**Yokohama-shi, Kanagawa 226-0022 (JP)**

(72) Inventors:
- **YOSHIMITSU, Shinichi**
  **Yokohama-shi, Kanagawa 226-0022 (JP)**
- **OKA, Ryouhei**
  **Yokohama-shi, Kanagawa 226-0022 (JP)**
- **SHINZATO, Mitsuya**
  **Yokohama-shi, Kanagawa 226-0022 (JP)**

(74) Representative: **Hasegawa, Kan**
**Patentanwaltskanzlei Hasegawa**
**Untere Hauptstraße 56**
**85354 Freising (DE)**

# (54) MAINTENANCE FLUID, METHOD FOR PRODUCING MAINTENANCE FLUID, METHOD FOR MAINTAINING INK-JET RECORDING DEVICE, AND INK-JET RECORDING DEVICE

(57) Provided is a maintenance fluid excellent in terms of humectant property and cleaning property. The maintenance fluid is for use in ink-jet recording devices, and comprises organic solvents that comprise a lactone-based solvent and an organic solvent A, wherein the organic solvent A has a boiling point of 240-310°C. The maintenance fluid has a volatile content X, as determined by the following test, of 900 g/L or less. Testing method: In accordance with the provisions of GB/T13173-2008, Chapter 15, the volatile content X is determined using equation (A) .

$$\text{Equation (A): Volatile content X} = Wv \times p \times 0.01$$

(In equation (A), Wv is the mass fraction (unit, mass%) of the organic solvents contained in the maintenance fluid and p indicates the specific gravity (unit, g/L) of the maintenance fluid. A two-gram portion of the maintenance fluid is precisely weighed out and put on a dish having a diameter of 5 cm and a height of 1 cm. This dish is put in an oven heated to 105°C to dry the maintenance fluid for four hours. Thereafter, the dish is allowed to cool for 30 minutes in a desiccator and then precisely weighted, and the amount Wv (mass%) of volatilized components of the organic solvents is calculated.)

EP 4 458 935 A1

## Description

### TECHNICAL FIELD

The present invention relates to a maintenance fluid, a method for producing the maintenance fluid, a method for maintaining an ink-jet recording device, and an ink-jet recording device.

### BACKGROUND ART

As an ink composition for ink jet, an aqueous composition dissolving or dispersing a coloring material in water or a mixed liquid of water and organic solvent, and a non-aqueous ink composition dissolving or dispersing a coloring material in an organic solvent which is free of water are being widely used.

With the ink jet recording device that performs recording using such an ink composition, when blockage occurs in the ink flow path or ink jet head due to components derived from the ink composition or component derived from members of the device, the supply of ink may be hindered, and poor discharge of ink may occur. Therefore, a maintenance fluid has been known which circulates in the ink flow paths which allow the ink composition to flow in the ink jet recording device. It should be noted that component derived from the ink composition is a solid component including a coloring material component, resin and the like contained in the ink composition discharged by the ink jet recording device, and metal compounds derived from the metals included as impurities, etc. In addition, component derived from the device members is precipitate, etc. of the device members, occurring by the ink composition dissolving a small part of the device members.

For example, Patent Document 1 discloses a technology related to a maintenance fluid of an ink jet recording device including at least two types of predetermined glycol derivative compounds. According to Patent Document 1, this maintenance fluid is described as excelling in drying property and humectant property.

In addition, Patent Document 2 discloses a technology related to a maintenance fluid containing a lactone-based solvent, and at least 30% by mass of alkylene glycol monoether solvent. According to Patent Document 2, this maintenance fluid is described as having reduced member attacking property, and being suited to cleaning of an ink jet recording device which uses an ink with organic solvent as the main component.

### Citation List

#### Patent Document

Patent Document 1: Japanese Unexamined Patent Application,

### DISCLOSURE OF THE INVENTION

#### Problems to be Solved by the Invention

Then, when the drying property of the maintenance fluid used in such an ink jet recording device is too high, the maintenance fluid will volatilize in the ink flow path, and it will no longer be possible to take out components derived from the ink composition adhered to the ink flow path.

The present invention has an object of providing a maintenance fluid which is superior in humectant property and cleaning property.

#### Means for Solving the Problems

The present inventors, upon conducting extensive research to solve the above problem, have found that it is possible to solve the above problem if a maintenance fluid containing a lactone-based solvent and an organic solvent having a predetermined boiling point, and a volatile content in a predetermined volatilization test of no more than a predetermined amount, thereby arriving at completion of the present invention. More specifically, the following invention is provided.

A first aspect relates to a maintenance fluid for use in an ink jet recording device, including: an organic solvent, in which the organic solvent includes a lactone-based solvent and an organic solvent A, the organic solvent A is an organic solvent having a boil point of at least 240°C and no higher than 310°C, a volatile content X in a test below is no more than 900 g/L,

a test method of the volatilization test includes measuring the volatile content X based on Formula (A) below, in

accordance with Chapter 15 of GB/T13173-2008,

$$\text{Volatile content } X = Wv \times p \times 0.01 \cdots (A)$$

in which Wv is a mass fraction in units of % by mass of an organic solvent contained in the maintenance fluid, and p represents specific gravity in units of g/L of the maintenance fluid,

precisely weighing 2 g of the maintenance fluid on a dish of 5 cm diameter and 1 cm height, placing the dish in an oven heated to 105°C, and drying for 4 hours,

removing from the oven, precisely weighing after allowing to cool for 30 minutes in a desiccator, and calculating the volatile content Wv (% by mass) of the organic solvent.

According to a second aspect of the present invention, in the maintenance fluid as described in the first aspect, the lactone-based solvent is contained in a range of no more than 15% by mass of a total amount of the maintenance fluid.

According to a third aspect of the present invention, in the maintenance fluid as described in the first or second aspect, the lactone-based solvent contains a lactone-based solvent represented by formula (1) below,

[Chem. 1]

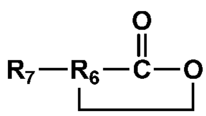

...(1)

in Formula (1), $R_6$ is an alkylene group having 3 to 5 carbon atoms, and $R_7$ represents a hydrogen atom or an alkyl group having 1 to 2 carbon atoms.

According to a fourth aspect of the present invention, in the maintenance fluid as described in the third aspect, the lactone-based solvent contains at least one selected from the group consisting of γ-butyrolactone, γ-valerolactone, δ-valerolactone, δ-hexanolactone, and ε-caprolactone.

According to a fifth aspect of the present invention, in the maintenance fluid as described in any one of the first to fourth aspects, the organic solvent A is an organic solvent having a boiling point no higher than 280°C, and content of the organic solvent A is in a range of at least 10% by mass and no more than 30% by mass of a total amount of the maintenance fluid.

According to a sixth aspect of the present invention, in the maintenance fluid as described in any one of the first to fifth aspects, the organic solvent A is at least one selected from the group consisting of triethylene glycol monobutyl ether, tetraethylene glycol monobutyl ether, and tetraethylene glycol monomethyl ether.

A seventh aspect of the present invention relates to a method for producing a maintenance fluid including producing the maintenance fluid as described in any one of the first to sixth aspects.

An eighth aspect of the present invention relates to a method for maintaining an ink jet recording device including a step of maintaining an ink jet recording device using the maintenance fluid as described in any one of the first to sixth aspects.

A ninth aspect of the present invention relates to an ink jet recording device for using the maintenance fluid as described in any one of the first to sixth aspects, the ink jet recording device including: a storage section containing the maintenance fluid.

## Effects of the Invention

The maintenance fluid according to the present invention is superior in humectant property and cleaning property.

## PREFERRED MODE FOR CARRYING OUT THE INVENTION

Hereinafter, specific embodiments of the present invention will be explained in detail; however, the present invention is not to be limited in any way to the following embodiments, and can be implemented with appropriate modifications within the scope of the object of the present invention. In addition, in the present disclosure, the notation of "~"

indicates "at least" or "no more than".

<1. Maintenance Fluid>

The maintenance fluid according to the present embodiment is a maintenance fluid which can be used in an ink jet recording device. It should be noted that "maintenance fluid used in an ink jet recording device" indicates being a maintenance fluid which can be used to remove components derived from the ink composition adhered to members inside the ink flow path or ink jet head in the ink jet recording device.

Then, the maintenance fluid according to the present embodiment is characterized in the matter of containing an organic solvent, and this organic solvent including a lactone-based solvent, and an organic solvent A having a boiling point of at least 240°C and no higher than 310°C, and the volatile content X in a volatilization test described below being no more than 900 g/L.

A test method of the volatilization test includes measuring the volatile content X based on Formula (A) below, in accordance with Chapter 15 of GB/T13173-2008,

Volatile content $X = Wv \times p \times 0.01 \cdots$ (A)

In the formula, Wv is a mass fraction in units of % by mass of an organic solvent contained in the maintenance fluid, and p represents specific gravity in units of g/L of the maintenance fluid. Two grams of the maintenance fluid is precisely measured on a dish of 5 cm diameter and 1 cm height, the dish is placed in an oven heated to 105°C, and dried for 4 hours. It is removed from the oven, precisely weighed after allowing to cool for 30 minutes in a desiccator, and the volatile content Wv (% by mass) of the organic solvent is calculated.

By being a maintenance fluid containing the organic solvent A having a boiling point of at least 240°C and no higher than 310°C, and having a volatile content X of no more than 900 g/L, it is possible to improve the humectant property of the maintenance fluid. Furthermore, since it is possible to suppress volatilization of the maintenance fluid in an ink flow path, it is possible to improve the cleaning property of the maintenance fluid.

Furthermore, so long as being a maintenance fluid having a volatile content no more than 900 g/L, it will make a maintenance fluid with low environmental impact, such that makes it possible to reduce the generation of suspended particulate matter (VOC) and suppresses air pollution. For example, in China, with the purpose of air pollution prevention, low VOC product standards are regulated in maintenance fluids, and by being a maintenance fluid having a volatile content X no more than 900 g/L, the maintenance fluid can be imported, manufactured and sold in China.

It should be noted that although it is sufficient if the volatile content X of the maintenance fluid is no more than 900 g/L, the upper limit for the volatile content X of the maintenance fluid is preferably no more than 897 g/L, and more preferably no more than 895 g/L.

Although the lower limit for the volatile content X of the maintenance fluid is not particularly limited, the lower limit for the volatile content X of the maintenance fluid is preferably at least 500 g/L, more preferably at least 700 g/L, and even more preferably at least 800 g/L. It thereby becomes possible to improve the drying property of the maintenance fluid.

As the method for establishing the volatile content X of the maintenance fluid as no more than 900 g/L, for example, a method which includes a predetermined amount of high-boiling organic solvent can be exemplified.

Hereinafter, each component contained in the maintenance fluid according to the present embodiment will be explained.

(Organic Solvent)

The organic solvent has a function of cleaning blockage of ink flow paths. Then, this organic solvent contains a lactone-based solvent, and an organic solvent A having a boiling point of at least 240°C and no higher than 310°C.

(Organic Solvent A)

Organic solvent A is an organic solvent having a boiling point of at least 240°C and no higher than 310°C. By containing the organic solvent A, it is possible to improve the humectant property of the maintenance fluid.

The boiling point of the organic solvent A is not particularly limited so long as being at least 240°C and no higher than 310°C; however, the lower limit for the boiling point of the organic solvent A is at least 250°C, is more preferably at least 270°C, and is even more preferably at least 280°C. It thereby becomes possible to decrease the volatile content X of the maintenance fluid overall, and it is possible to more effectively improve the humectant property of the maintenance fluid.

The upper limit for the boiling point of the organic solvent A is preferably no higher than 305°C, and is more

preferably no higher than 300°C. It is thereby possible to improve the drying property of the maintenance fluid.

As the organic solvent A, more specifically, it is possible to exemplify triethylene glycol monobutyl ether, tetraethylene glycol monobutyl ether, and tetraethylene glycol monomethyl ether.

The content of the organic solvent A having a boiling point of at least 240°C and no higher than 310°C is not particularly limited; however, the lower limit for the content of the organic solvent A is preferably at least 10% by mass of the total amount of the maintenance fluid, is more preferably at least 13% by mass, and even more preferably at least 15% by mass. It thereby becomes possible to decrease the volatile content X of the maintenance fluid overall, and it is possible to more effectively improve the humectant property of the maintenance fluid.

The upper limit for the content of the organic solvent A is preferably no more than 30% by mass of the total amount of the maintenance fluid, is more preferably no more than 27% by mass, and is even more preferably no more than 25% by mass. It is thereby possible to improve the drying property of the maintenance fluid.

(Lactone-based Solvent)

Lactone-based solvent is a solvent having a cyclic ester structure. By containing the lactone-based solvent, it is possible to improve the cleaning property of the maintenance fluid.

The lactone-based solvent, for example, can preferably employ a lactone-based solvent having the following structure.

[Chem. 2]

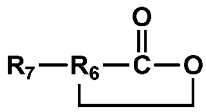

...(1)

(In Formula (1), $R_6$ is an alkylene group having 3 to 5 carbon atoms, and $R_7$ represents an alkyl group having 1 to 2 carbon atoms.

Thereamong, $R_6$ is preferably 3 to 4, and is more preferably 3. By containing such a lactone-based solvent, it is possible to improve the cleaning property of the maintenance fluid.

As the lactone-based solvent, it is possible to exemplify the lactone-based solvents of γ-butyrolactone, γ-valerolactone, γ-hexalactone, γ-heptalactone, γ-octalactone, γ-nonalactone, γ-decalactone, γ-undecalactone, δ-valerolactone, δ-hexanolactone, ε - caprolactone, δ-valerolactone, δ-hexalactone, δ-heptalactone, δ-octalactone, δ-nonalactone, δ-decalactone, and δ-undecalactone. Thereamong, it is preferable to contain at least one selected from the group consisting of γ-butyrolactone, γ-valerolactone, δ-valerolactone, δ-hexanolactone, and ε-caprolactone.

The content of the lactone-based solvent is not particularly limited; however, the lower limit for the content of the lactone-based solvent is preferably in the range of at least 1% by mass of the total amount of maintenance fluid, is more preferably in the range of at least 3% by mass, and is even more preferably in the range of at least 10% by mass. It is thereby possible to more effectively improve the cleaning property of the maintenance fluid.

The upper limit for the content of the lactone-based solvent is preferably no more than 90% by mass of the total amount of the maintenance fluid, is more preferably no more than 60% by mass, is even more preferably no more than 40% by mass, and is particularly preferably no more than 15% by mass. In addition to the effects of the present invention, it thereby becomes a maintenance fluid having high component suitability to the members constituting an ink jet recording device.

(Other Organic Solvents)

In the organic solvent, other organic solvents may be contained other than the above organic solvent A and lactone-based solvent. More specifically, it is possible to exemplify organic solvents not corresponding to the organic solvent A and lactone-based solvent, among organic solvents such as alkylene glycol monoalkyl ethers such as ethylene glycol mono-n-butyl ether, ethylene glycol mono-isobutyl ether, ethylene glycol mono-t-butyl ether, ethylene glycol mono-2-ethylhexyl ether, diethylene glycol monomethyl (or ethyl, propyl, isopropyl, n-butyl, isobutyl, t- butyl, 2-ethylhexyl)ether, triethylene glycol monomethyl (or ethyl, propyl, isopropyl, n-butyl, isobutyl, t-butyl, 2-ethylhexyl) ether, tetraethylene glycol monomethyl ether, propylene glycol mono-n-butyl ether, propylene glycol mono-isobutyl ether, propylene Glycol mono-t-butyl ether, propylene glycol mono-2-ethylhexyl ether, dipropylene glycol monomethyl (or ethyl, propyl, isopropyl, n-butyl, isobutyl, t-butyl, 2-ethylhexyl) ether, tripropylene glycol monomethyl (or ethyl, propyl, isopropyl, n-butyl, isobutyl, t-butyl) ether, tetrapropylene glycol monomethyl ether (or ethyl, propyl, isopropyl, n-butyl, isobutyl, t-butyl, 2-ethylhexyl); dialkyl ethers of polyhydric alcohols such as ethylene glycol dibutyl ether, ethylene glycol dipropyl ether, diethylene

glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl- 2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, Propylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether and tripropylene glycol ethyl methyl ether; carbonate esters such as propylene carbonate and ethylene carbonate; acetate-based solvents such as ethylene glycol monomethyl (or ethyl, propyl, isopropyl, n-butyl, isobutyl, t-butyl, pentyl, n-hexyl, 2-ethylhexyl) ether acetate, diethylene glycol monomethyl (or ethyl, propyl, isopropyl, n-butyl, isobutyl, t-butyl, pentyl, n-hexyl, 2-ethylhexyl) ether acetate, triethylene glycol monomethyl (or ethyl, propyl, isopropyl, n-butyl, isobutyl, t-butyl, pentyl, n-hexyl, 2-ethylhexyl) ether acetate, propylene glycol monomethyl (or ethyl, propyl, isopropyl, n-butyl, isobutyl, t-butyl, pentyl, n-hexyl, 2-ethylhexyl) ether acetate, dipropylene glycol monomethyl (or ethyl, propyl, isopropyl, n-butyl, isobutyl, t-butyl, pentyl, n-hexyl, 2-ethylhexyl) ether acetate, tripropylene glycol monomethyl (or ethyl, propyl, isopropyl, n-butyl), isobutyl, t-butyl, pentyl, n-hexyl, 2-ethylhexyl) ether acetate, ethylene glycol diacetate, diethylene glycol diacetate, propylene glycol diacetate, dipropylene glycol diacetate, 1-methoxy-2-propyl acetate, 3-methoxybutyl acetate, 2-methylbutyl acetate, 3-methoxybutyl ether acetate and cyclohexyl acetate; amides such as formamide, acetamide, propanamide, butanamide, isobutyramide, pentanamide, N-methylformamide, N-methylacetamide, N-methylpropanamide, N-methylbutanamide, N-methylisobutyramide, N-methylpentanamide, N-ethylformamide, N-ethylacetamide, N-ethylpropanamide, N-ethylbutanamide, N-ethylisobutyramide, N-ethylpentanamide, N-propylformamide, N-propylacetamide, N-propylpropanamide, N-propylbutanamide, N-propylisobutyramide, N-propylpentanamide, N-isopropylformamide, N-isopropylacetamide, N-isopropylpropanamide, N-isopropylbutanamide, N-isopropylisobutyramide, N-isopropylpentanamide, N-butylformamide, N-butylacetamide, N-butylpropanamide, N,N-dipropylpentanamide, N,N-diisopropylformamide, N,N-diisopropylacetamide, N,N-diisopropylpropanamide, N,N-diisopropylbutanamide, N,N-diisopropylisobutyramide, N,N -diisopropylpentanamide, N,N-dibutylformamide, N,N-dibutylacetamide, N,N-dibutylpropanamide, N,N-dibutylbutanamide, N,N-dibutylisobutylamide, N,N-dibutylpentanamide, N-ethyl-N-methylformamide, N-ethyl-N-methylacetamide, N-ethyl-N-methylpropanamide, N-ethyl-N-methylbutanamide, N-ethyl-N-methylisobutyramide, N-ethyl-N-methylpentanamide, N -methyl-N-propylformamide, N-methyl-N-propylacetamide, N-methyl-N-propylpropanamide, N-methyl-N-propylbutanamide, N-methyl-N-propylisobutyramide, N-methyl -N-propylpentanamide, N-ethyl-N-propylformamide, N-ethyl-N-propylacetamide, N-ethyl-N-propylpropanamide, N-ethyl-N-propylbutanamide, N-ethyl-N -propylisobutyramide, and N-ethyl-N-propylpentanamide; alkoxyamide solvents such as 3-methoxypropanamide, 3-butoxypropanamide, N,N-dimethyl-3-methoxypropanamide, N,N-dibutyl-3-methoxypropanamide, N,N-dibutyl-3-butoxypropanamide, and N, N-dimethyl-3-butoxypropanamide; cyclic amide solvents such as 3-methyl-2-oxazolidinone, 3-ethyl-2-oxazolidinone, N-vinylmethyloxazolidinone, N-methylcaprolactam, N-ethylcaprolactam, N-propylcaprolactam, N-acetylcaprolactam, ε-caprolactam, N-vinylcaprolactam, 2-pyrrolidone, N-methyl-2-pyrrolidone, N-ethyl-2-pyrrolidone, and N-propyl-2-pyrrolidone; C1 to C5 alkyl alcohols such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monohydric alcohols such as 3-methoxy-3-methyl-1-butanol, 3-methoxy-1-propanol, 1-methoxy-2-propanol, and 3-methoxy-n-butanol; ketones or keto alcohols such as acetone, methyl ethyl ketone, methyl n-propyl ketone, methyl isopropyl ketone, methyl n-butyl ketone, methyl isobutyl ketone, methyl n-amyl ketone, methyl hexyl ketone, methyl isoamyl ketone, diethyl ketone, ethyl n-propyl ketone, ethyl isopropyl ketone, ethyl-n-butyl ketone, ethyl isobutyl ketone, di-n-propyl ketone, diisobutyl ketone, cyclopentanone, cyclohexanone, methylcyclohexanone, isophorone and acetyl ketone; ethers such as tetrahydrofuran and dioxane; oxyethylene or oxypropylene copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propane diol, 2-methyl-1,2-propanediol, 1,2-butanediol, 1,3-butanediol, 1,4-butanediol, 1,2-pentanediol, 1,2-hexanediol, 1, 5-pentanediol, 1,6-hexanediol, 2-methyl-2,4-pentanediol, 3-methyl-1,3-butanediol, 3-methyl-1,5-pentanediol, and 2-methyl-2 ,4-pentanediol; triols such as glycerin, trimethylolethane, and trimethylolpropane, 1,2,6-hexanetriol; tetrahydric alcohols such as mesoerythritol and pentaerythritol; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; acetate esters such as methyl acetate, ethyl acetate, n-propyl acetate, isopropyl acetate, n-butyl acetate, isobutyl acetate, hexyl acetate, and octyl acetate; lactic acid esters such as methyl lactate, ethyl lactate, butyl lactate, propyl lactate, ethylhexyl lactate, amyl lactate, and isoamyl lactate; dibasic acid esters such as dimethyl oxalate, diethyl oxalate, dimethyl malonate, diethyl malonate, dipropyl malonate, dimethyl succinate, diethyl succinate, dimethyl glutarate, and diethyl glutarate; saturated hydrocarbons such as n-hexane, isohexane, n-nonane, isononane, dodecane, and isododecane; unsaturated hydrocarbons such as 1-hexene, 1-heptene, and 1-octene; cyclic saturated hydrocarbons such as cyclohexane, cycloheptane, cyclooctane, cyclodecane, and decalin; cyclic unsaturated

hydrocarbons such as cyclohexene, cycloheptene, cyclooctene, 1,1,3,5,7-cyclooctatetraene, and cyclododecene; aromatic hydrocarbons such as benzene, toluene, and xylene; morpholines such as N-methylmorpholine, N-ethylmorpholine, and N-formylmorpholine; and terpene-based solvents. According to the resin, dispersing agent, etc. to be combined, a solvent of the appropriate HLB value is preferably selected.

The content of other organic solvents has no particular restrictions; however, the lower limit for the content of other organic solvents is preferably in the range of at least 10% by mass of the total amount of maintenance fluid, is more preferably in the range of at least 20% by mass, and even more preferably in the range of at least 30% by mass. The upper limit for the content of other organic solvents is preferably in the range of no more than 90% by mass of the total amount of maintenance fluid, is more preferably in the range of no more than 85% by mass, and even more preferably in the range of no more than 80% by mass.

(Coloring Material)

The maintenance fluid according to the present embodiment may contain a coloring material. By containing a coloring material, it becomes possible to suppress corrosion of members by the organic solvent contained in the maintenance fluid, and thus component suitability is favorable.

The coloring material is not particularly limited, and may be a dye system or pigment system; however, pigments are preferable from the viewpoint of dispersibility in the maintenance fluid. In the maintenance fluid according to the present embodiment, the pigments which can be used are not particularly limited, and organic pigments which are being used in conventional ink compositions can be exemplified. These may be used individually, or may be used by combining two or more types. It should be noted that the maintenance fluid according to the present embodiment may not necessary contain a coloring material.

In the case of using a pigment in the maintenance fluid according to the present embodiment, it is possible to improve the dispersion stability of the pigment, by using a dispersant or dispersion aid (pigment derivative) described later. As specific organic pigments, for example, insoluble azo pigments, soluble azo pigments, derivatives from dyes, phthalocyanine organic pigments, quinacridone organic pigments, perylene organic pigments, perinone organic pigments, azomethine organic pigments, anthraquinone organic pigments (anthrone organic pigments), xanthene organic pigments, diketopyrrolopyrrole organic pigments, dioxazine organic pigments, nickel azo pigments, isoindolinone organic pigments, pyranthrone organic pigments, thioindigo organic pigments, condensed azo organic pigments, benzimidazolone organic pigments, quinophthalone organic pigments, isoindoline organic pigments, organic solid solution pigments such as quinacridone solid solution pigments, perylene solid solution pigments, and as other pigments, lake pigment and carbon black and the like can be exemplified.

When exemplifying the organic pigment by a color index (C.I.) number, C.I. pigment yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, 214; C.I. pigment red 5, 7, 9, 12, 48, 48:2, 48:3, 49, 52, 53, 57:1, 97, 112, 122, 123, 146, 149, 150, 168, 177, 180, 184, 185, 192, 202, 206, 208, 209, 213, 215, 216, 217, 220, 223, 224, 226, 227, 228, 238, 240, 254, 255, 269, 291; C.I. pigment orange 16, 36, 43, 51, 55, 59, 61, 64, 71, 73; C.I. pigment violet 19, 23, 29, 30, 37, 40, 50; C.I. pigment blue 15, 15:1, 15:3, 15:4, 15:6, 16, 22, 60, 64; C.I. pigment green 7, 36, 58, 59, 62, 63; C.I. pigment brown 23, 25, 26; C.I. pigment black 7; etc. can be exemplified.

In the maintenance fluid according to the present embodiment, the average dispersed particle sizes of the pigment which can be contained are not particularly limited. Although differing according to the type of pigment used, from the point of the dispersibility and dispersion stability of the pigment being favorable, and obtaining sufficient coloring power, the volume average particle size is preferably in the range of at least 5 nm, more preferably at least 20 nm, and even more preferably at least 30 nm. The volume average particle size is preferably within the range of no more than 300 nm, more preferably no more than 200 nm, and even more preferably no more than 150 nm. It should be noted that, in the present embodiment, the volume average particle size of the pigment is the volume average particle size (D50) measured under the condition of 25°C using a particle size distribution measuring device (nanoparticle size analyzer NANOTRAC WAVE manufactured by Microtrac Bel). It should be noted that "volume basis cumulative 50% particle size (D50)" in the present disclosure indicates the particle size at which the cumulative volume calculated from the small diameter size becomes 50%.

"Volume basis cumulative 50% particle size (D50)" may be called "volume average particle size D50" or "median diameter".

In the maintenance fluid according to the present embodiment, as specific examples of the dyes which can be used, azo dyes, benzoquinone dyes, naphthoquinone dyes, anthraquinone dyes, cyanine dyes, squarylium dyes, croconium dyes, merocyanine dyes, stilbene dyes, diarylmethane dyes, triarylmethane dyes, fluoran dyes, spiropyran dyes, phthalocyanine dyes, indigo dyes such as indigoid, fulgide dyes, nickel complex dyes, and azulene dyes can be exemplified.

The content of coloring material is not particularly limited; however, the lower limit for the content of coloring

material is preferably in the range of at least 0.0005% by mass of the total amount of maintenance fluid, more preferably in the range of at least 0.001% by mass, and even more preferably in the range of at least 0.005% by mass. The upper limit for the content of coloring material is preferably in the range of no more than 1.0% by mass of the total amount of maintenance fluid, more preferably in the range of no more than 0.5% by mass, and even more preferably in the range of no more than 0.3% by mass.

It should be noted that the maintenance fluid according to the present embodiment preferably does not contain a coloring material. Since it is possible to reduce the possibility of the coloring material contained in the maintenance fluid precipitating as a solid, it becomes possible to improve the cleaning property of the maintenance fluid.

(Dispersing Agent)

The maintenance fluid according to the present embodiment may contain a dispersing agent. It thereby becomes possible to effectively disperse components derived from the ink composition, and possible to improve the cleaning property of the maintenance fluid. In particular, in the maintenance fluid according to the present embodiment, since the component suitability relative to resin cured material is high by containing the organic solvent A, and superior in cleaning property, it is possible to further enhance the cleaning property thereof by containing the dispersing agent.

As the dispersing agent, a polymeric dispersing agent may be used. As such a dispersing agent, the main chain consists of a polyester, polyacrylic, polyurethane, polyamine, polycaprolactone, or the like, and the side chains have a polar group such as an amino group, carboxyl group, sulfone group and hydroxyl group. As a polyacrylic dispersing agent, for example, Disperbyk-2000, 2001, 2008, 2009, 2010, 2020, 2020N, 2022, 2025, 2050, 2070, 2095, 2150, 2151, 2155, 2163, 2164, BYKJET-9130, 9131, 9132, 9133, 9151 (manufactured by Bic Chemical Co., Ltd.); EfkaPX4310, PX4320, PX4330, PA4401, 4402, PA4403, 4570, 7411, 7477, PX4700, PX4701 (manufactured by BASF Corp.); TREPLUS D-1200, D-1410, D-1420, MD-1000 (manufactured by Otsuka Chemical Co., Ltd.); Floren DOPA-15BHFS, 17HF, 22, G-700, 900, NC-500, GW-1500 (manufactured by Kyoeisha Chemical Co., Ltd.), etc. can be used. In the polycaprolactone dispersing agent, AJISPER PB821, PB822, PB881 (manufactured by Ajinomoto Fine-Techno Co., Inc.); Hinoact KF-1000, T-6000, T-7000, T-8000, T-8000E, T-9050 (manufactured by Kakawaken Fine Chemicals Co., Ltd.); Solsperse20000, 24000, 32000, 32500, 32550, 32600, 33000, 33500, 34000, 35200, 36000, 37500, 39000, 71000, 76400, 76500, 86000, 88000, J180, J200 (manufactured by The Lubrizol Corp.); TEGO Dispers652, 655, 685, 688, 690 (manufactured by Evonik Japan Co., Ltd.) can be used. As preferred dispersing agents, BYKJET-9130, 9131, 9132, 9133, 9151, Efka PX4310, PX4320, PX4330, PX4700, PX4701, Solsperse 20000, 24000, 32000, 33000, 33500, 34000, 35200, 39000, 71000, 76500, 86000, 88000, J180, J200, TEGO Dispers655, 685, 688, 690, etc. can be used. It is possible to use these individually, or as a mixture of these.

The content of dispersing agent is not particularly limited; however, the lower limit for the content of dispersing agent is preferably in the range of at least 0.0001% by mass of the total amount of maintenance fluid, more preferably in the range of at least 0.0005% by mass, and even more preferably in the range of at least 0.001% by mass. The upper limit for the content of dispersing agent is preferably in the range of no more than 3.0% by mass of the total amount of maintenance fluid, more preferably in the range of no more than 1.0% by mass, and even more preferably in the range of no more than 0.5% by mass.

(Dispersion Aid)

A dispersion aid may be used as necessary in the maintenance fluid according to the present embodiment. The dispersion aid absorbs on the surface of the coloring material (pigment), and the functional group enhances the affinity with the organic solvent or dispersing agent in the maintenance fluid, and improves the dispersion stability. As the dispersion aid, it is possible to use a known pigment derivative having a functional group such as an acidic group, basic group and neutral group in organic pigment residue.

(Surfactant)

In the maintenance fluid according to the present embodiment, with the object of volatilization suppression and solidification prevention of the maintenance fluid within a device such as in a nozzle part or tube , or redissolution ability upon solidifying, or the purpose of reducing surface tension and improving cleaning property, a surfactant may be added. For example, fluorine-modified polymers are preferably used as fluorine-based surfactants such as P-208, P-210, P-213, E-202S, E-205S, E-215, K-204, K-220, S-207, S-215, A-10R, A-13P, NC- 203, NC-207 (manufactured by NOF Corporation), Emulgen 106, 108, 707, 709, A-90, A-60 (manufactured by Kao Corporation), Florene G-70, D-90, TG-740W (manufactured by Kyoeisha Chemical Co., Ltd.), Poem J-0081HV (manufactured by Riken Vitamin Co., Ltd.), Adecatol NP-620, NP-650, NP-660, NP-675, NP-683, NP-686, Adekacol CS- 141E, TS-230E (manufactured by Adeka Co., Ltd.), Solgen 30V, 40, TW-20, TW-80, Neugen CX-100 (manufactured by Daiichi Kogyo Seiyaku Co., Ltd.), which

are polyoxyalkylene alkyl ethers; polyester-modified silicones or polyether-modified silicones are preferably used as silicone-based surfactants such as BYK-340 (manufactured by BIC Chemie Japan Co., Ltd.), and as specific examples, BYK-313, 315N, 322, 326, 331, 347, 348, 3753, BYK-UV3500, 3510, 3530, 3570 (all manufactured by BIC Chemie Japan Co., Ltd.), etc. can be exemplified as the acetylene glycol-based surfactants; and as specific examples, SURFYNOL (trademark) 82, 104, 465, 485 TG (all manufactured by Air Products Japan Co., Ltd.), OLFINE (trademark) STG, E1010 (all manufactured by Nissin Chemical Industry Co., Ltd.), etc. can be exemplified. It should be noted that the maintenance fluid according to the present embodiment may not necessarily contain a surfactant.

The surfactant is not limited to the above, and any surfactant of an anionic system, cationic system, amphoteric system or nonionic system can be used, and may be appropriately selected according to the purpose of addition.

(Other Components)

The maintenance fluid according to the present embodiment may contain, as optional components, known additives such as a photostabilizer such as antioxidants and ultraviolet absorbers, epoxides, etc., polyhydric carboxylic acids, surface conditioning agents, slip agents, leveling agents (acrylic based, silicone based, etc.), antifoaming agents, pH adjusters, bactericidal agents, preservatives, deodorants, charge regulating agents, wetting agents, pigments, and extender pigments.

(Regarding Moisture)

The maintenance fluid according to the present embodiment is preferably a non-aqueous maintenance fluid in which the content of moisture is no more than 5% by mass of the overall amount of the maintenance fluid. By being such a maintenance fluid, it becomes a maintenance fluid superior in cleaning property.

It should be noted that, to establish a maintenance fluid that absorbs as little moisture in the air as possible, it is preferable to configure to contain little organic solvent having high water absorbency.

In addition, in order to configure so as to contain as little moisture as possible in the maintenance fluid, it is preferable to dry the organic solvent in advance upon manufacturing the maintenance fluid. By drying the organic solvent in advance, it is possible to reduce the moisture amount contained in the maintenance fluid. In particular, since glycol ether monoalkyl having an -OH group has high water absorbency, and absorbs moisture in the atmosphere, it is particularly preferable to dry glycol ether monoalkyl in advance. As the method of drying the organic solvent, a method which blows an inert gas (e.g., nitrogen gas) dried under an inert gas atmosphere such as nitrogen for a predetermined time, a method of distilling and purifying the organic solvent, a method of passing the organic solvent through a semi-permeable membrane which allows water to selectively pass, a method of selectively absorbing water mixed into the organic solvent to a water absorbent that absorbs water, or the like can be exemplified.

<2. Manufacturing Method of Maintenance Fluid>

The above maintenance fluid can be manufactured by mixing an organic solvent containing a lactone solvent and organic solvent A, and various components (e.g., resin, coloring material, etc.) as necessary using a paint shaker. At this time, each component may be dispersed in zirconia beads. In addition, as necessary, after preparing the dispersion in which a coloring material is dispersed in a specific solvent, the ink composition may be prepared by adding other components. The maintenance fluid according to the present embodiment may be adjusted to a desired dissolved oxygen amount or dissolved nitrogen amount by conducting deaeration treatment as necessary. It should be noted it is possible to manufacture the ink composition described later by a similar method as the maintenance fluid.

At this time, it is preferable to select an organic solvent of high boiling point so that the volatile content X of the maintenance fluid is no more than 900 g/L.

<3. Maintenance Method>

The maintenance method according to the present embodiment is a method of performing maintenance of an ink jet recording device using the above-mentioned maintenance fluid. Since the maintenance fluid is superior in humectant property and cleaning property, so long as a maintenance method forming maintenance of the ink jet recording device using this maintenance fluid, it is possible to remove components derived from the ink composition adhering within the ink flow path by the cleaning property thereof.

The members contacted by the ink composition in the ink jet recording device are not particularly limited; however, the ink flow path of the ink jet recording device, head cap of the recording device, wiper, flushing area, platen, nozzle plate, ink mist adhering locations in the housing, etc. can be exemplified.

The ink flow path of the ink jet recording device, the ink composition housing container storing the ink composition,

supply path (tube, damper, etc.) for supplying the ink composition to the ink jet head from the ink composition housing container (ink cartridge, bottle, etc.), flow path for circulating the ink composition back to the nozzle opening within the ink jet head, etc. can be exemplified.

As the maintenance method according to the present embodiment, for example, circulating the above maintenance fluid to the ink flow path of the ink jet recording device can be exemplified. More specifically, a method discharging the ink composition from the ink jet recording device in which the ink composition is filled, and then circulating the above maintenance fluid; a method circulating the above maintenance fluid from upstream of the ink flow path in a state not discharging the ink composition from the ink jet recording device in which the ink composition was filled, and then discharging the ink composition; a method discharging the maintenance fluid from the ink jet recording device in which the above maintenance fluid is filled, and then circulating the ink composition; and a method circulating the ink composition from upstream of the ink flow path in a state not discharging the maintenance fluid, and discharging the maintenance fluid from the ink jet recording device in which the maintenance fluid is filled, etc. can be exemplified.

Distributing or discharging of the above maintenance fluid may be performed using a common cleaning operation of ink jet recording devices.

In addition, as the maintenance method of the head cap, wiper, flushing area, platen, nozzle plate, ink mist adhering locations in the housing, etc. of the ink jet recording device is not particularly limited; however, for example, a method which applies the maintenance fluid to these members to which the ink composition adheres, and wipes off the maintenance fluid as necessary can be exemplified. Upon wiping off, the maintenance fluid may be allowed to soak a wiping member such as a wiper (rubber or fiber based), and the member to which the ink composition adheres such as the nozzle opening of the ink jet head may be wiped off.

In addition, a cap having a through hole may be put on the nozzle opening of the ink jet head, and vacuum may be generated in the cap by a suction pump connected to the through hole via a tube to distribute the above maintenance fluid in the ink flow path of the ink jet recording device.

<4. Ink Jet Recording Device>

An ink jet recording device in which the above maintenance fluid is used can adopt a conventionally known device. Such an ink jet recording device is an ink jet recording device in which the above maintenance fluid is used specifically, and includes a storage section including the above maintenance fluid. As the ink jet recording device, for example, it is possible to use an ink jet printer or the like such as the VersaArt RE-640 manufactured by Roland DGA Corp.

The ink jet recording device according to the present embodiment includes a storage section containing the maintenance fluid, and a storage section containing the ink composition, and can ink jet discharge the ink composition contained in the storage section by the ink jet head. This ink jet head may be a piezo-type ink jet head using piezoelectric elements, or may be a thermal-type ink jet head using a heating element, and no particularly restrictions are made thereon.

Thereamong, the ink jet recording device according to the present embodiment preferably performs recording using a non-aqueous ink composition. The above maintenance fluid contains a lactone-based solvent, and can effectively remove components derived from non-aqueous ink compositions. It should be noted that "non-aqueous ink composition" differs from an aqueous ink composition in which water is a main component, and is an ink composition containing organic solvents manufactured to not intentionally contain water, and is an ink composition in which the content of moisture is no more than 5% by mass of the total amount of the non-aqueous ink composition, for example. It should be noted that the content of moisture is preferably no more than 3% by mass of the total amount of the non-aqueous ink composition, and is more preferably no more than 1% by mass.

<5. Ink Composition>

The ink composition discharged by the above ink jet recording device may be a conventionally known ink composition. Thereamong, the ink composition discharged by the above ink jet recording device is preferably a non-aqueous ink composition.

Thereamong, an ink composition discharged from the above ink jet recording device more preferably contains an alkylene glycol dialkyl ether, a lactone-based solvent, and an organic solvent B having a boiling point of at least 240°C and no higher than 310°C. The above maintenance fluid contains the lactone-based solvent and organic solvent A, and so long as being the above maintenance fluid, can further improve the cleaning property of the maintenance fluid, due to being able to disperse and dissolve components derived from an ink composition containing a lactone-based solvent and organic solvent having a boiling point of at least 240°C and no higher than 310°C.

Furthermore, by containing an organic solvent contained in the ink composition of the same type of solvent as the organic solvent contained in the above maintenance fluid, since it becomes possible to disperse and dissolve components derived from the ink composition adhering to members by the maintenance fluid, it is possible to further improve the cleaning property of the maintenance fluid.

The upper limit for the boiling point of the organic solvent B having a boiling point of at least 240°C and no higher than 310°C is preferably no higher than 305°C, and is more preferably no higher than 300°C.

As the organic solvent B having a boiling point of at least 240°C and no higher than 310°C, more specifically, it is possible to exemplify triethylene glycol monobutyl ether, tetraethylene glycol monobutyl ether, and tetraethylene glycol monomethyl ether.

The content of the organic solvent B having a boiling point of at least 240°C and no higher than 310°C is not particularly limited; however, the lower limit for the content of the organic solvent B is preferably at least 10% by mass of the total amount of ink composition, is more preferably at least 13% by mass, and even more preferably at least 15% by mass.

The upper limit for the content of the organic solvent B is preferably no more than 30% by mass of the total amount of ink composition, is more preferably no more than 27% by mass, and even more preferably no more than 25% by mass.

The lactone-based solvent can use the same type of solvent as the lactone-based solvent contained in the aforementioned maintenance fluid.

The content of lactone-based solvent is not particularly limited, and the lower limit for the content of lactone-based solvent is not particularly limited; however, the lower limit for the content of the lactone-based solvent is preferably in the range of at least 1% by mass of the total amount of ink composition, is more preferably in the range of at least 3% by mass, and even more preferably in the range of at least 10% by mass.

The upper limit for the content of lactone-based solvent is preferably no more than 90% by mass of the total amount of ink composition, is more preferably no more than 60% by mass, even more preferably no more than 40% by mass, and particularly preferably no more than 35% by mass.

The alkylene glycol dialkyl ether is a glycol ether solvent represented by the following formula (4).

$$R_f(-O-R_g)_n-O-R_h \cdots \quad (4)$$

(In Formula (4), $R_f$ and $R_h$ are each independently an alkyl group which may be branched with 1 to 8 carbon atoms, and $R_g$ represents an alkylene group which may be branched with 1 to 4 carbon atoms. n represents an integer of 1 to 6.)

As the glycol ether dialkyl, ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methylpropyl ether, dipropylene glycol dipropyl ether, dipropylene glycol methyl butyl ether, tripropylene glycol Dimethyl ether, tripropylene glycol diethyl ether, tripropylene glycol ethyl methyl ether, and the like can be exemplified.

Thereamong, diethylene glycol dimethyl ether, diethylene glycol diethyl ether, diethylene glycol ethyl methyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methylpropyl ether, dipropylene glycol dipropyl ether, tripropylene glycol dimethyl ether, tripropylene glycol ethyl methyl ether, etc. can be exemplified as preferred glycol ether dialkyls.

The preferred content of the glycol ether dialkyl represented by Formula (4) is preferably at least 40% by mass of the total amount of ink composition, is more preferably at least 50% by mass, and even more preferably at least 60% by mass.

The preferred content of glycol ether dialkyl represented by Formula (4) is preferably no more than 95% by mass of the total amount of ink composition, is more preferably no more than 90%, and even more preferably no more than 85%.

(Other Organic Solvents)

In the organic solvent, other organic solvents may be included other than the above organic solvent B, lactone-based solvent and glycol ether dialkyl. More specifically, it is possible to exemplify organic solvents not corresponding to the above organic solvent B, lactone-based solvent and glycol ether dialkyl, among organic solvents such as alkylene

glycol monoalkyl ethers such as ethylene glycol mono-n-butyl ether, ethylene glycol mono-isobutyl ether, ethylene glycol mono-t-butyl ether, ethylene glycol mono-2-ethylhexyl ether, diethylene glycol monomethyl (or ethyl, propyl, isopropyl, n-butyl, isobutyl, t- butyl, 2-ethylhexyl)ether, triethylene glycol monomethyl (or ethyl, propyl, isopropyl, n-butyl, isobutyl, t-butyl, 2-ethylhexyl) ether, tetraethylene glycol monomethyl ether, propylene glycol mono-n-butyl ether, propylene glycol mono-isobutyl ether, propylene Glycol mono-t-butyl ether, propylene glycol mono-2-ethylhexyl ether, dipropylene glycol monomethyl (or ethyl, propyl, isopropyl, n-butyl, isobutyl, t-butyl, 2-ethylhexyl) ether, tripropylene glycol monomethyl (or ethyl, propyl, isopropyl, n-butyl, isobutyl, t-butyl) ether, tetrapropylene glycol monomethyl ether (or ethyl, propyl, isopropyl, n-butyl, isobutyl, t-butyl, 2-ethylhexyl); dialkyl ethers of polyhydric alcohols such as ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl- 2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, Propylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether and tripropylene glycol ethyl methyl ether; carbonate esters such as propylene carbonate and ethylene carbonate; acetate-based solvents such as ethylene glycol monomethyl (or ethyl, propyl, isopropyl, n-butyl, isobutyl, t-butyl, pentyl, n-hexyl, 2-ethylhexyl) ether acetate, diethylene glycol monomethyl (or ethyl, propyl, isopropyl, n-butyl, isobutyl, t-butyl, pentyl, n-hexyl, 2-ethylhexyl) ether acetate, triethylene glycol monomethyl (or ethyl, propyl, isopropyl, n-butyl, isobutyl, t-butyl, pentyl, n-hexyl, 2-ethylhexyl) ether acetate, propylene glycol monomethyl (or ethyl, propyl, isopropyl, n-butyl, isobutyl, t-butyl, pentyl, n-hexyl, 2-ethylhexyl) ether acetate, dipropylene glycol monomethyl (or ethyl, propyl, isopropyl, n-butyl, isobutyl, t-butyl, pentyl, n-hexyl, 2-ethylhexyl) ether acetate, tripropylene glycol monomethyl (or ethyl, propyl, isopropyl, n-butyl), isobutyl, t-butyl, pentyl, n-hexyl, 2-ethylhexyl) ether acetate, ethylene glycol diacetate, diethylene glycol diacetate, propylene glycol diacetate, dipropylene glycol diacetate, 1-methoxy-2-propyl acetate, 3-methoxybutyl acetate, 2-methylbutyl acetate, 3-methoxybutyl ether acetate and cyclohexyl acetate; amides such as formamide, acetamide, propanamide, butanamide, isobutyramide, pentanamide, N-methylformamide, N-methylacetamide, N-methylpropanamide, N-methylbutanamide, N-methylisobutyramide, N-methylpentanamide, N-ethylformamide, N-ethylacetamide, N-ethylpropanamide, N-ethylbutanamide, N-ethylisobutyramide, N-ethylpentanamide, N-propylformamide, N-propylacetamide, N-propylpropanamide, N-propylbutanamide, N-propylisobutyramide, N-propylpentanamide, N-isopropylformamide, N-isopropylacetamide, N-isopropylpropanamide, N-isopropylbutanamide, N-isopropylisobutyramide, N-isopropylpentanamide , N-butylformamide, N-butylacetamide, N-butylpropanamide, N,N-dipropylpentanamide, N,N-diisopropylformamide, N,N-diisopropylacetamide, N,N-diisopropylpropanamide, N,N-diisopropylbutanamide, N,N-diisopropylisobutyramide, N,N - diisopropylpentanamide, N,N-dibutylformamide, N,N-dibutylacetamide, N,N-dibutylpropanamide, N,N-dibutylbutanamide, N,N-dibutylisobutylamide, N,N-dibutylpentanamide, N-ethyl-N-methylformamide, N-ethyl-N-methylacetamide, N-ethyl-N-methylpropanamide, N-ethyl-N-methylbutanamide, N-ethyl-N-methylisobutyramide, N-ethyl-N-methylpentanamide, N -methyl-N-propylformamide, N-methyl-N-propylacetamide, N-methyl-N-propylpropanamide, N-methyl-N-propylbutanamide, N-methyl-N-propylisobutyramide, N-methyl -N-propylpentanamide, N-ethyl-N-propylformamide, N-ethyl-N-propylacetamide, N-ethyl-N-propylpropanamide, N-ethyl-N-propylbutanamide, N-ethyl-N - propylisobutyramide, and N-ethyl-N-propylpentanamide; alkoxyamide solvents such as 3-methoxypropanamide, 3-butoxypropanamide, N,N-dimethyl-3-methoxypropanamide, N,N-dibutyl-3-methoxypropanamide, N,N-dibutyl-3-butoxypropanamide, and N, N-dimethyl-3-butoxypropanamide; cyclic amide solvents such as 3-methyl-2-oxazolidinone, 3-ethyl-2-oxazolidinone, N-vinylmethyloxazolidinone, N-methylcaprolactam, N-ethylcaprolactam, N-propylcaprolactam, N-acetylcaprolactam, ε-caprolactam, N-vinylcaprolactam, 2-pyrrolidone, N-methyl-2-pyrrolidone, N-ethyl-2-pyrrolidone, and N-propyl-2-pyrrolidone; C1 to C5 alkyl alcohols such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monohydric alcohols such as 3-methoxy-3-methyl-1-butanol, 3-methoxy-1-propanol, 1-methoxy-2-propanol, and 3-methoxy-n-butanol; ketones or keto alcohols such as acetone, methyl ethyl ketone, methyl n-propyl ketone, methyl isopropyl ketone, methyl n-butyl ketone, methyl isobutyl ketone, methyl n-amyl ketone, methyl hexyl ketone, methyl isoamyl ketone, diethyl ketone, ethyl n-propyl ketone, ethyl isopropyl ketone, ethyl-n-butyl ketone, ethyl isobutyl ketone, di-n-propyl ketone, diisobutyl ketone, cyclopentanone, cyclohexanone, methylcyclohexanone, isophorone and acetyl ketone; ethers such as tetrahydrofuran and dioxane; oxyethylene or oxypropylene copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propane diol, 2-methyl-1,2-propanediol, 1,2-butanediol, 1,3-butanediol, 1,4-butanediol, 1,2-pentanediol, 1,2-hexanediol, 1, 5-pentanediol, 1,6-hexanediol, 2-methyl-2,4-pentanediol, 3-methyl-1,3-butanediol, 3-methyl-1,5-pentanediol, and 2-methyl-2 ,4-pentanediol; triols such as glycerin, trimethylolethane, and trimethylolpropane, 1,2,6-hexanetriol; tetrahydric alcohols such as mesoerythritol and pentaerythritol; alkanolamines

such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; acetate esters such as methyl acetate, ethyl acetate, n-propyl acetate, isopropyl acetate, n-butyl acetate, isobutyl acetate, hexyl acetate, and octyl acetate; lactic acid esters such as methyl lactate, ethyl lactate, butyl lactate, propyl lactate, ethylhexyl lactate, amyl lactate, and isoamyl lactate; dibasic acid esters such as dimethyl oxalate, diethyl oxalate, dimethyl malonate, diethyl malonate, dipropyl malonate, dimethyl succinate, diethyl succinate, dimethyl glutarate, and diethyl glutarate; saturated hydrocarbons such as n-hexane, isohexane, n-nonane, isononane, dodecane, and isododecane; unsaturated hydrocarbons such as 1-hexene, 1-heptene, and 1-octene; cyclic saturated hydrocarbons such as cyclohexane, cycloheptane, cyclooctane, cyclodecane, and decalin; cyclic unsaturated hydrocarbons such as cyclohexene, cycloheptene, cyclooctene, 1,1,3,5,7-cyclooctatetraene, and cyclododecene; aromatic hydrocarbons such as benzene, toluene, and xylene; morpholines such as N-methylmorpholine, N-ethylmorpholine, and N-formylmorpholine; and terpene-based solvents. According to the resin, dispersing agent, etc. to be combined, solvents of the appropriate HLB vale are preferably selected.

The content of other organic solvents is not particularly limited; however, the lower limit for the content of other organic solvents is preferably in the range of at least 10% by mass of the total amount of maintenance fluid, is more preferably in the range of at least 20% by mass, and is even more preferably in the range of at least 30% by mass. The upper limit for the content of other organic solvents is preferably in the range of no more than 90% by mass of the total amount of maintenance fluid, is more preferably in the range of no more than 85% by mass, and is even more preferably in the range of no more than 80% by mass.

(Resin)

The ink composition according to the present embodiment may not necessarily contain resins; however, it may contain resins. By containing a resin, it is possible to improve the fixing property, water resistance, and stretchability of the recorded layer formed by the ink composition. It should be noted that, in the present disclosure, "resin" indicates a binder resin imparting abrasion resistance to the recorded layer (recorded material) mainly, and differs from the dispersing agent (polymer dispersants) containing a coloring material (pigment) and polymer surfactants such as surfactants containing a siloxane backbone described later.

If containing a resin in the ink composition, since the content of solids included in the ink composition increases, part of the solids included in the ink composition will tend to precipitate. Given this, problems of the present invention of an increase in viscosity of the ink composition, and solids precipitating in the ink composition will more remarkably occur. So long as a maintenance fluid containing the organic solvent A, it will be possible to effectively solve the problems of the present invention which become more remarkable by containing resins.

The resin is not particularly limited; however, for example, it is possible to use acrylic resins (including copolymers such as styrene-acrylic resin), polystyrene resin, polyester resin, vinyl chloride resin, vinyl acetate resin, vinyl chloride vinyl acetate copolymer resin, polyethylene resin, polyurethane resin, rosin modified resin, phenol resin, terpene resin, polyamide resin, vinyltoluene-$\alpha$-methylstyrene copolymer, ethylene-vinyl acetate copolymer, cellulose resin, silicone resin, acrylamide resin, epoxy resin, polyether resin, polycarbonate resin, or copolymer resins and mixtures thereof. Thereamong, it preferably contains an acrylic resin, vinyl chloride-vinyl acetate copolymer resin, cellulose resin, polyester resin or polyurethane resin.

The acrylic resin is not particularly limited so long as including (meth)acrylic acid ester monomer as a main component of the constituent monomers. The acrylic resin may be a homopolymer of one type of radical polymerizable monomer, may be any copolymer made by using at least two selected radical polymerizable monomers, and in particular, preferred acrylic resins as the oil-based ink composition according to the present embodiment are polymers of only methyl methacrylate, or copolymers of methyl methacrylate and at least one compound selected from the group consisting of butyl methacrylate, ethoxyethyl methacrylate, and benzyl methacrylate. Alternatively, as commercially available (meth)acrylic resins, for example, "Paraloid B99N", "Paraloid B60", "Paraloid B66", "Paraloid B82" manufactured by Rohm and Haas Company, or the like can be exemplified.

The vinyl chloride resin may be a homopolymer consisting of a vinyl chloride monomer, or may be any copolymer made by selecting and using at least two types of polymerizable monomers. As the copolymer of the vinyl chloride resin, for example, a vinyl chloride-vinyl acetate copolymer resin can be exemplified. The vinyl chloride-vinyl acetate copolymer resin is a polymer of a vinyl chloride monomer and vinyl acetate monomer. As the vinyl chloride vinyl acetate copolymer resin, for example, vinyl chloride/vinyl acetate copolymer, vinyl chloride/vinyl acetate/maleic acid copolymer, vinyl chloride/vinyl acetate/vinyl alcohol copolymer, vinyl chloride/vinyl acetate/hydroxyalkyl acrylate copolymer, etc., and mixtures thereof can be exemplified. The above-mentioned the vinyl chloride vinyl acetate copolymer resin can be obtained by tradenames such as "SOLBIN C", "SOLBIN CL", "SOLBIN CNL", "SOLBIN CLL", "SOLBIN CLL2", "SOLBIN C5R", "SOLBIN TA2", "SOLBIN TA3", "SOLBIN A", "SOLBIN AL", "SOLBIN TA5R" and "SOLBIN M5" from Nissin Chemical Industry Co., Ltd., and used in the present invention.

The vinyl chloride-vinyl acetate copolymer resin can be obtained by polymerizing vinyl chloride monomer and vinyl acetate monomer. The method of polymerization is sufficient if a conventionally known polymerization method. The method of polymerization is preferably emulsion polymerization or suspension polymerization, and is more preferably suspension polymerization.

Cellulose-based resin is a resin having a cellulose backbone obtained by biologically or chemically introducing a functional group with the source material of cellulose. For example, as the cellulose-based resin, for example, cellulose acetate alkylate resins such as cellulose acetate butyrate resin, cellulose acetate propionate resin, cellulose acetate propionate butyrate resin; cellulose acetate resin; nitrocellulose resin; and mixtures of these can be exemplified. As the above-mentioned cellulose resin, it is possible to procure by tradename such as "CAB551-0.01", "CAB551-0.2", "CAB553-0.4", "CAB531-1", "CAB381-0.1", "CAB381-0.5", "CAB381-2", "CAB381-20", "CAP504" and "CAP482-0.5" from Eastman Co., Ltd. and use.

The polyester resin at least includes at least one constituent unit obtained by condensation polymerizing an alcohol component and carboxylic acid component. The polyester resin may contain a modified polyester resin. As the above-mentioned polyester resin, it is possible to procure by tradename such as "VYLON226", "VYLON270", "VYLON560", "VYLON600", "VYLON630", "VYLON660", "VYLON885", "VYLONGK250", "VYLONGK810" and "VYLON GK890" manufactured by Toyobo Co., Ltd., or "elitle UE-3200", "elitle UE-3285", "elitle UE-3320", "elitle UE-9800" and "elitle UE-9885" manufactured by Unitika Ltd. and use.

The polyurethane resin at least includes a constituent unit obtained by copolymerizing an alcohol component and izocyanate component. The polyurethane resin may include a polyurethane resin modified by polyester, polyether or caprolactone. As the above-mentioned polyurethane resin, it is possible to procure by tradename of "UREARNO KL-424", "UREARNO KL-564", "UREARNO KL-593", "UREARNO 3262", etc. from Arakawa Chemical Industries, Ltd., or "PANDEX 372E", "PANDEX 390E", "PANDEX 394E", "PANDEX 304", "PANDEX 305E", "PANDEX P-870", "PANDEX P-910", "PANDEX P-895", "PANDEX 4030" and "PANDEX 4110" from DIC Corp., or the like and use.

In addition, these acrylic resin, vinyl chloride-vinyl acetate copolymer resins, cellulose resins, polyester resins, and polyurethane resins may be used individually; however, it is preferable to use by mixing two types, and is more preferable to use resins made by mixing acrylic resin and vinyl chloride-vinyl acetate copolymer resin. According to the content ratio of the acrylic resin and vinyl chloride-vinyl acetate copolymer resin, it is possible to control so as to meet the requirements for color development, drying property, coating film property, printing suitability, etc. demanded in the ink composition. In the case of mixing the acrylic resin and vinyl chloride-vinyl acetate copolymer resin, the mixing ratio is not particularly limited, and can be modified as appropriate.

The weight average molecular weight (relative molecular mass) of the resin is not particularly limited; however, it is preferably at least 5000, and more preferably at least 15000. The weight average molecular weight (relative molecular mass) is preferably no more than 100000, and more preferably no more than 50000. The relative molecular mass of resin can be measured by common GPC (gel permeation chromatography).

The resin contained in the ink composition depends on other components contained in the ink composition; however, it is preferably contained in the range of at least 0.05% by mass of the total amount of ink composition, more preferably contained in the range of at least 0.1% by mass, and even more preferably contained in the range of at least 0.5% by mass. The resin contained in the ink composition is preferably contained in the range of no more than 20.0% by mass of the total amount of ink composition, more preferably contained in the range of no more than 15.0% by mass, and even more preferably contained in the range of no more than 10.0% by mass.

(Coloring Material)

The ink composition according to the present embodiment contains a coloring material. The coloring material can use the same type as the coloring material included in the aforementioned maintenance fluid. The preferred average disperse particle size of the pigment is similar to the preferred average disperse particle size of the pigment included in the aforementioned maintenance fluid.

The content of coloring material is appropriately adjusted without being particularly limited so long as able to form the desired image. More specifically, although it differs depending on the type of coloring material, it is preferably in the range of at least 0.05% by mass of the total amount of ink composition, and more preferably in the range of at least 0.1% by mass. It is preferably in the range of no more than 20% by mass of the total amount of ink composition, and more preferably in the range of no more than 10% by mass. By the content of coloring material being in the range of at least 0.05% by mass, or in the range of no more than 20% by mass, it is possible to establish an ink composition superior in balance between the dispersion stability and coloring power of the coloring material.

(Dispersing Agent)

A dispersing agent may be used as necessary in the ink composition according to the present embodiment.

The dispersing agent can use the same type as the coloring material included in the aforementioned maintenance fluid.

The content of the dispersing agent is not particularly limited; however, the lower limit for the content of dispersing agent is preferably in the range of at least 0.1% by mass of the total amount of ink composition, more preferably in the range of at least 0.5% by mass, and even more preferably in the range of at least 0.8% by mass. The content of the dispersing agent is not particularly limited; however, the lower limit for the content of dispersing agent is preferably in the range of at least 5.0% by mass of the total amount of ink composition, is more preferably in the range of at least 4.0% by mass, and is even more preferably in the range of at least 3.0% by mass. It thereby becomes possible to effectively disperse the dispersing agent of the pigment in the ink composition, and thus solids occurring in the ink composition can be effectively suppressed.

(Dispersion Aid)

A dispersion aid may be used as necessary in the ink composition according to the present embodiment. The dispersion aid absorbs to the surface of the coloring material (pigment), and has a functional group which enhances the affinity to the organic solvent or dispersing agent in the ink composition, and thus improves dispersion stability. The dispersion aid can use a known pigment derivative having a functional group such as an acidic group, basic group or neutral group in an organic pigment residues.

(Surfactant)

In the ink composition according to the present embodiment, a surfactant may be added with the purpose of volatilization suppression and solidification prevention of the ink composition in the device such as in the nozzle part or tubes, or redissolution ability when solidified, or with the purpose of reducing surface tension to improve the wettability on the recording medium (substrate).

(Other Components)

The ink composition according to the present embodiment may contain, as optional components, known additives such as stabilizers such as antioxidants and ultraviolet absorbers, epoxides, etc., polyhydric carboxylic acids, surface conditioning agents, slip agents, leveling agents (acrylic based, silicone based, etc.), antifoaming agents, pH adjusters, bactericidal agents, preservatives, deodorants, charge regulating agents and wetting agents. As specific examples of the antioxidant, for example, hindered phenol antioxidants, amine antioxidants, phosphorus antioxidants, sulfur antioxidants, hydrazine antioxidants and the like can be exemplified. More specifically, BHA (2,3-butyl-4-oxyanisole), BHT (2,6-di-t-butyl-p-cresol) and the like can be exemplified. In addition, as the ultraviolet absorbing agent, it is possible to use a benzophenone compound or benzotriazole compound. In addition, as specific examples of the epoxide, epoxy glycerides, epoxy fatty acid monoesters, epoxy hexahydrophthalates, etc. can be exemplified, and more specifically, ADK CIZER O-130P and ADK CIZER O-180A (manufactured by ADEKA Corp.) and the like can be exemplified. As specific examples of the polyhydric carboxylic acid, citric acid, maleic acid and the like can be exemplified.

## EXAMPLES

Although the present invention will be explained in further detail by way of Examples below, the present invention is not to be subject to any restrictions from these descriptions.

### 1. Manufacture of Maintenance Fluid

The maintenance fluids (non-aqueous maintenance fluid) of the Examples and Comparative Examples were manufactured by mixing each component so as to make the proportions of Table 1 below. The units are % by mass. It should be noted that the non-aqueous maintenance fluid indicates a maintenance fluid not intentionally containing water, and not substantially containing water.

Then, for the maintenance fluids of the Examples and Comparative Examples, based on the provisions of chapter 15 of GB/T13173-2008, 2 grams of sample were accurately weighed on a dish of 5 cm diameter × 1 cm height, this was placed in an oven heated to 105°C, and dried for 4 hours. After taking out, it was accurately weighed after cooled for 30 minutes in a desiccator, and the volatile content X ($Wv \times p \times 0.01$) was calculated.

2. Evaluation

(Cohesiveness)

Cohesiveness was evaluated for the maintenance fluids of the Examples and Comparative Examples. More specifically, 20 g of ink composition (yellow ink containing 58.0% by mass of diethylene glycol diethyl ether, 13.4% by mass of γ-butyrolactone, 4.5% by mass of triethylene glycol mono-n-butyl ether, 13.3% by mass of diethylene glycol methyl ethyl ether, 3.0% by mass of coloring material, and 7.9% by mass of other solids) and 20 g of the maintenance fluids of the Examples and Comparative Examples were respectively mixed to obtain mixed liquids. Subsequently, this mixed liquid was sealed tightly in a container at room temperature of 25°C and left for 5 days. After sufficiently shaking the left mixed liquid, 5 ml of the mixed liquid was filtered by a filter of 10 um pore size, and the aggregates derived from the ink composition on the filter were observed (noted as "cohesiveness" in Table). Evaluation Criteria

Rank 5: occurrence of aggregates not observed at all
Rank 4: some aggregates confirmed, but passed through without problem
Rank 3: aggregates confirmed, but passed through without problem
Rank 2: many aggregates confirmed, and poor liquid passage occurred
Rank 1: total amount could not pass

(Humectant Property)

The humectant property was evaluated for the maintenance fluids of the Examples and Comparative Examples. More specifically, using an ink jet recording device including a cleaning system (using VersaArt RE-640 manufactured by Roland DGA Corp), the manufactured ink composition was filled, a nozzle check pattern was printed, and it was confirmed that the ink composition (yellow ink containing 58.0% by mass of diethylene glycol diethyl ether, 13.4% by mass of γ-butyrolactone, 4.5% by mass of triethylene glycol mono-n-butyl ether, 13.3% by mass of diethylene glycol methyl ethyl ether, 3.0% by mass of coloring material, and 7.9% by mass of other solids) was normally discharged from all nozzles. Subsequently, this ink composition was discharged, and the maintenance fluid of the Examples and Comparative Examples was filled, and left for one month at 60% humidity at room temperature of 25°C. Subsequently, the maintenance fluid was discharged and filled with the manufactured ink composition again, and after conducting the cleaning operation once, the nozzle check pattern was printed again, and the number of non-discharging nozzles was counted (noted as "humectant property" in Table). Evaluation Criteria

Rank 5: 0 non-discharging
Rank 4: 1 to 4 non-discharging
Rank 3: 5 to 10 non-discharging
Rank 2: 11 to 20 non-discharging
Rank 1: 21 or more non-discharging

(Cleaning Property)

The cleaning property (solubility) was evaluated for the maintenance fluids of the Examples and Comparative Examples. More specifically, 0.5 g of the manufactured ink composition (yellow ink containing 58.0% by mass of diethylene glycol diethyl ether, 13.4% by mass of γ-butyrolactone, 4.5% by mass of triethylene glycol mono-n-butyl ether, 13.3% by mass of diethylene glycol methyl ethyl ether, 3.0% by mass of coloring material, and 7.9% by mass of other solids) was placed on a glass dish, placed in an oven at 60°C and heated for 2 hours to dry the ink composition, and then the components derived from the ink composition were precipitated. Subsequently, it was cooled at 25°C, then 1.0 g of the maintenance fluid of the Examples and Comparative Examples was added dropwise to the solidified component derived from the ink composition, and then the solubility (humectant property) thereof was evaluated visually (noted as "humectant property" in Table). Evaluation Criteria

Rank 5: solidified component completely dissolved, and no solidified component remains
Rank 4: solidified component completely dissolved, and almost no solidified component remains
Rank 3: solidified component completely dissolved, but parts not dissolved
Rank 2: solidified component completely dissolved, but dissolved lumps mostly undissolved
Rank 1: solidified component not dissolved

(Drying Property)

The drying property was evaluated for the maintenance fluids of the Examples and Comparative Examples. More specifically, pure magenta ink was filled into the printer (Tradename; VersaArt RE-640 manufactured by Roland DGA Corp.), and solid printed at 100% concentration on the recording medium (adhesive polyvinyl chloride film (IMAGin JT5829R: manufactured by MACtac)) to obtain a recorded product 1. Subsequently, in the ink replacement operation of the printer, the pure ink was discharged and the maintenance fluid of the Examples and Comparative Examples was filled. Furthermore, the maintenance fluid was discharged and maintenance fluid was filled again. In other words, the ink replacement operation was conducted twice. From this state, the maintenance fluid was discharged, this printer was placed for 5 days in a constant temperature room with no humidification at 40°C, followed for taking out to a 20°C environment and cooling for 1 day. Next, the pure magenta ink was filled in the ink replacement operation of the printer, and solid printed at 100% concentration on the recording medium to obtain recorded product 2. The recorded products 1 and 2 were measured for color using the X-Rite eXact (manufactured by X-Rite Inc.), at conditions of viewing angle of 2°, measurement range of 4 mm, and D65 light source, and based on the pattern of the recorded product 1 and color difference ΔE of the recorded product 2, the drying property was evaluated according to the following evaluation criteria (noted as drying property in Table). Evaluation Criteria

Rank 5: ΔE less than 3
Rank 4: ΔE of 3 or more and less than 5
Rank 3: ΔE of at least 5 and less than 7.5
Rank 2: ΔE of at least 7.5 and less than 10
Rank 1: ΔE of at least 10

(Component Suitability)

Component suitability (component suitability of ink jet head) was evaluated for the maintenance fluids of the Examples and Comparative Examples. More specifically, 0.2 g of the cured product made by drying the epoxy adhesive used in the members of the ink jet head (2-part curing epoxy adhesive "1500" manufactured by Cemedine Co., Ltd.) for 1 day at 60°C was soaked in the maintenance fluids of the Examples and Comparative Examples, left for 1 week at 60°C to perform an immersion test, and the weight change of the cured produced was measured (noted as "component suitability" in Table). Evaluation Criteria

Rank 5: weight change rate less than 3%, and no deterioration in material of epoxy adhesive
Rank 4: weight change rate of at least 3% and less than 5%, and no deterioration in material of epoxy adhesive
Rank 3: weight change rate of at least 5% and less than 10%, and no deterioration in material of epoxy adhesive
Rank 2: weight change rate of at least 10% and less than 15%, and no deterioration in material of epoxy adhesive
Rank 1: weight change rate of at least 15% and/or deterioration in material of epoxy adhesive

[Table 1]

| | | | Examples | | | | | | | | | | | | | Comparative Examples | | | | |
|---|---|---|---|---|---|---|---|---|---|---|---|---|---|---|---|---|---|---|---|---|
| | | Boiling point °C | 1 | 2 | 3 | 4 | 5 | 6 | 7 | 8 | 9 | 10 | 11 | 12 | 13 | 1 | 2 | 3 | 4 | 5 |
| Lactone-based solvent | GBL | 208 | 14 | | 14 | 14 | 14 | 30 | 50 | 14 | 14 | 20 | 14 | 14 | 5 | 14 | 20 | 20 | 25 | |
| | DBL | 215 | | 14 | | | | | | | | | | | | | | | | |
| Organic solve A | BTG | 270-280 | 17 | 17 | | | 17 | 17 | 17 | 10 | 20 | | 5 | 30 | 17 | | | | | 17 |
| | MTG | 247 | | | 17 | | | | | | | | | | | | | | | |
| | TetraEGmBe | 304 | | | | 17 | | | | | | 80 | | | | | | | | |
| | dPGmME | 190 | | | | | | | | | | | | | | | 60 | 30 | 55 | |
| | DEDG | 188-190 | 69 | 69 | 69 | 69 | | 53 | 33 | 76 | 66 | | 81 | 56 | 78 | 86 | 20 | 50 | 20 | 83 |
| | MEDG | 176-170 | | | | | 69 | | | | | | | | | | | | | |
| Total | | | 100 | 100 | 100 | 100 | 100 | 100 | 100 | 100 | 100 | 100 | 100 | 100 | 100 | 100 | 100 | 100 | 100 | 100 |
| Volatile content X | | | 888 | 887 | 894 | 884 | 898 | 885 | 882 | 894 | 885 | 811 | 899 | 876 | 890 | 903 | 902 | 902 | 902 | 891 |
| Cohesiveness | | | 5 | 4 | 5 | 5 | 5 | 5 | 5 | 5 | 4 | 2 | 4 | 3 | 3 | 4 | 2 | 2 | 2 | 2 |
| Humectant property | | | 5 | 5 | 4 | 5 | 4 | 5 | 5 | 4 | 5 | 5 | 3 | 5 | 3 | 1 | 2 | 2 | 2 | 2 |
| Cleaning property | | | 5 | 4 | 5 | 5 | 5 | 5 | 5 | 5 | 5 | 5 | 5 | 5 | 3 | 5 | 5 | 5 | 5 | 1 |
| Drying property | | | 5 | 5 | 5 | 4 | 5 | 5 | 5 | 5 | 4 | 3 | 4 | 2 | 4 | 5 | 2 | 3 | 3 | 4 |
| Component suitability | | | 5 | 5 | 5 | 5 | 5 | 3 | 2 | 5 | 5 | 4 | 5 | 5 | 5 | 4 | 3 | 3 | 3 | 5 |

"DEDG" in Table is diethylene glycol diethyl ether.
"GBL" in Table is γ-butyrolactone.
"BTG" in Table is triethylene glycol monobutyl ether.
"MEDG" in Table is diethylene glycol ethyl methyl ether.
"DBL" in Table is δ-valerolactone.
"dPGmME" in Table is dipropylene glycol monomethyl ether.
"TetraEGmBE" in Table is tetraethylene glycol monobutyl ether.

As evident from the above Table, it is found to be superior in humectant property and cleaning property so long as being a maintenance fluid containing the lactone-based solvent, and organic solvent having a predetermined boiling point, and having a volatile content X in a predetermined volatility test of no more than a predetermined value.

In particular, among the maintenance fluids of Examples 1, 3 and 4 having varied types of organic solvent A, the maintenance fluids of Examples 1 and 4 containing an organic solvent with the boiling point of the organic solvent A of at least 250°C and no higher than 310°C had higher humectant property even compared to the maintenance fluid of Example 3.

Furthermore, among the maintenance fluids of Examples 1 and 13 having varied contents of the lactone-based solvent, the maintenance fluid of Example 1 having a content of the lactone-based solvent of at least 10% by mass had higher cleaning property even compared to the maintenance fluid of Example 13.

On the other hand, the maintenance fluids of Comparative Examples 1 to 4 had a volatile content X exceeding 900 g/L, and had lower humectant property when comparing with the maintenance fluids of the Examples. In addition, the maintenance fluid of Comparative Example 5 did not contain the lactone-based solvent, and had low cleaning property when comparing with the maintenance fluids of the Examples.

## Claims

1. A maintenance fluid for use in an ink jet recording device, comprising:

   an organic solvent,
   wherein the organic solvent includes a lactone-based solvent and an organic solvent A,
   wherein the organic solvent A is an organic solvent having a boil point of at least 240°C and no higher than 310°C,
   wherein a volatile content X in a volatilization test below is no more than 900 g/L,
   wherein a test method of the volatilization test includes measuring the volatile content X based on Formula (A) below, in accordance with Chapter 15 of GB/T13173-2008,

   $$\text{Volatile content } X = Wv \times p \times 0.01 \cdots (A)$$

   wherein Wv is a mass fraction in units of % by mass of an organic solvent contained in the maintenance fluid, and p represents specific gravity in units of g/L of the maintenance fluid,
   precisely weighing 2 g of the maintenance fluid on a dish of 5 cm diameter and 1 cm height, placing the dish in an oven heated to 105°C, and drying for 4 hours,
   removing from the oven, precisely weighing after allowing to cool for 30 minutes in a desiccator, and calculating the volatile content Wv (% by mass) of the organic solvent.

2. The maintenance fluid according to claim 1, wherein the lactone-based solvent is contained in a range of no more than 15% by mass of a total amount of the maintenance fluid.

3. The maintenance fluid according to claim 1 or 2, wherein the lactone-based solvent contains a lactone-based solvent represented by formula (1) below.

[Chem. 1]

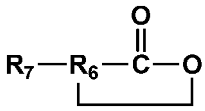

...(1)

wherein, in Formula (1), $R_6$ is an alkylene group having 3 to 5 carbon atoms, and $R_7$ represents a hydrogen atom or an alkyl group having 1 to 2 carbon atoms.

**4.** The maintenance fluid according to claim 3, wherein the lactone-based solvent contains at least one selected from the group consisting of γ-butyrolactone, γ-valerolactone, δ-valerolactone, δ-hexanolactone, and ε-caprolactone.

**5.** The maintenance fluid according to any one of claims 1 to 4, wherein the organic solvent A is an organic solvent having a boiling point no higher than 280°C, and
wherein content of the organic solvent A is in a range of at least 10% by mass and no more than 30% by mass of a total amount of the maintenance fluid.

**6.** The maintenance fluid according to any one of claims 1 to 5, wherein the organic solvent A is at least one selected from the group consisting of triethylene glycol monobutyl ether, tetraethylene glycol monobutyl ether, and tetraethylene glycol monomethyl ether.

**7.** A method for producing a maintenance fluid, comprising a step of producing the maintenance fluid according to any one of claims 1 to 6.

**8.** A method for maintaining an ink jet recording device comprising a step of maintaining an ink jet recording device using the maintenance fluid according to any one of claims 1 to 6.

**9.** An ink jet recording device for using the maintenance fluid according to any one of claims 1 to 6, the ink jet recording device comprising:
a storage section containing the maintenance fluid.

## INTERNATIONAL SEARCH REPORT

International application No.
**PCT/JP2022/047688**

**A. CLASSIFICATION OF SUBJECT MATTER**

***C11D 7/26***(2006.01)i; ***C11D 7/50***(2006.01)i; ***B41J 2/165***(2006.01)i
FI: B41J2/165 401; C11D7/26; C11D7/50

According to International Patent Classification (IPC) or to both national classification and IPC

**B. FIELDS SEARCHED**

Minimum documentation searched (classification system followed by classification symbols)

B41J2/01-2/215; C11D1/00-19/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-49774 A (RICOH CO LTD) 01 April 2021 (2021-04-01)<br>paragraphs [0006]-[0036], fig. 1-5 | 1-9 |
| A | US 2009/0029892 A1 (SAMSUNG ELECTRONICS CO., LTD.) 29 January 2009 (2009-01-29)<br>entire text, all drawings | 1-9 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/047688**

| Patent document cited in search report | Publication date (day/month/year) | Patent family member(s) | Publication date (day/month/year) |
|---|---|---|---|
| JP 2021-49774 A | 01 April 2021 | WO 2021/053496 A1<br>paragraphs [0006]-[0036], fig. 1-5<br>CN 114269563 A | |
| US 2009/0029892 A1 | 29 January 2009 | KR 10-2009-0011482 A<br>entire text, all drawings | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB T131732008 A